# EUROPEAN PATENT APPLICATION

(11) **EP 1 577 805 A1**
(43) Date of publication of application: **21.09.2005**
(21) Application number: 03777310.8
(22) Date of filing: 05.12.2003
(51) Int. Cl.: G06F 17/60, B65G 61/00

(54) **DOOR-TO-DOOR PARCEL DELIVERY INFORMATION EXCHANGE SYSTEM**

(30) Priority: 05.12.2002 JP 2002353207
(71) Applicant: Kagiwada, Yoshimitsu, Kanagawa 258-0002 (JP); Keysoft Inc., Kanagawa 258-0002 (JP)
(72) Inventor: KAGIWADA, Yoshimitsu, Ashigarakami-gun, Kanagawa 258-0002 (JP); MIYAUCHI, Masahiro, Komae-shi, Tokyo 201-0004 (JP); IKEUCHI, Hisanori, Kawasaki-shi, Kanagawa 216-0005 (JP)
(74) Representative: Kelly, Peter F.
(86) International application number: PCT/JP2003/015623
(87) International publication number: WO 2004/051539

(57) **Abstract**

The object of the present invention is to provide the system capable of grasping a transaction state from a commodity purchase to the settlement and reception of the commodity. In order to achieve the objective, the processing means executes a processing such as storing a billing amount based on the order reception information in the door-to-door parcel delivery information storage means by every piece of order reception information received from the receiver side terminal; storing the delivery state information received from the deliverer side terminal in the door-to-door parcel delivery information storage means by every piece of order reception information; and when receiving a transmission request from the receiver side terminal, referencing the door-to-door parcel delivery information storage means, and then transmitting the billing amount and the delivery state information to the receiver side terminal by every piece of the order reception information.

## Description

### Technical field of the invention

The present invention relates to a door-to-door parcel delivery information exchange system mutually exchanging a commodity transaction state such as a delivery state of the commodity on a network.

### Background art

Conventionally, a commodity is delivered at the hand of a receiver from an order receiver, through a commodity transaction from a commodity purchase to the settlement and reception of the commodity.

However, under the circumstance described above, parties involved in the commodity transaction such as the order receiver and the receiver of the commodity can not simultaneously grasp a transaction state of the commodity.

Therefore, an object of the present invention is to solve inconvenience in the aforementioned conventional system, and provide the system capable of simultaneously grasping the transaction state of the commodity by the parties involved in the commodity transaction, by mutually exchanging the transaction state of the commodity on a network.

### Disclosure of the Invention

In order to accomplish the aforementioned object, the invention according to claim 1 comprises:
commodity information storage means that stores commodity information;
door-to-door parcel delivery information storage means that stores a billing amount based on the order reception information and a delivery state information of the commodity associated with the order reception information, by every piece of order reception information of the commodity associated with the commodity information;
communication means that communicates with an external device; and
processing means that controls the operation of each means,
wherein the processing means executes a processing such as receiving the order reception information of the commodity associated with the commodity information from a receiver side terminal of the commodity that receives the commodity information through the communication means, and then storing a billing amount based on the order reception information in the door-to-door parcel delivery information storage means by every piece of order reception information thus received; receiving delivery state information of the commodity associated with the order reception information from a deliverer side terminal by every piece of the order reception information through the communication means, and then storing the delivery state information thus received in the door-to-door parcel delivery information storage means by every piece of order reception information; and when receiving a transmission request of a storage result stored in the door-to-door parcel delivery information storage means from the receiver side terminal, referencing a storage result stored in the door-to-door parcel delivery information storage means, and then transmitting the billing amount based on the order reception information and the delivery state information of the commodity associated with the order reception information to the receiver side terminal, from which the transmission request is given, through the communication means by every piece of the order reception information.

In the door-to-door parcel delivery information exchange system according to claim 2 further comprises delivery source information storage means that stores delivery source information of a delivery source from which the commodity associated with the order reception information is shipped, wherein the door-to-door parcel delivery information storage means performs the processing such as storing a shipping slip of the commodity based on the order reception information by every piece of the order reception information; and the processing means performs the processing such as preparing the shipping slip of the commodity based on the order reception information thus received, and storing the shipping slip thus prepared in the door-to-door parcel delivery information storage means by every piece of order reception information received; reading the delivery source information of the delivery source, from which the commodity associated with the received order reception information is shipped, from the delivery source information storage means; referencing the door-to-door-parcel delivery information storage means, and then transmitting the shipping slip thus prepared to the deliverer side terminal of the delivery source of the delivery source information thus read, by every piece of order reception information that receives the shipping slip thus prepared.

In the door-to-door parcel delivery information exchange system according to claim 1, the invention according to claim 3 comprises the processing means which executes the processing such as referencing a result stored in the door-to-door parcel delivery information storage means, and storing the billing amount as already paid by every piece of the order reception information, when receiving the information that payment in accordance with the billing amount is completed, from the payment side terminal which received the billing amount and the delivery state information by every piece of the order reception information through the communication means.

In the door-to-door parcel delivery information exchange system according to claim 1, the invention according to claim 4 comprises the commodity information which includes the information on a fragile article or a pet, and the delivery state information includes the information on a broken state of the fragile article, or a state of the pet, in delivering the commodity.

With such aspects as described above, the object of the present invention is realized.

### Brief description of the drawings

Fig. 1 is an overall system block diagram of a door-to-door parcel delivery information exchange system.
Fig.2 is a data structure diagram in the door-to-door parcel delivery information storage means shown in Fig. 1, showing a relation among order reception information, a billing amount, and delivery state information.
Fig.3 is a data structure diagram in the door-to-door parcel delivery information storage means shown in Fig. 1, showing the relation between the order reception information and a shipping slip.
Fig.4 is a block diagram showing the structure of a receiver side terminal shown in Fig.1.
Fig.5 is a flowchart showing a processing executed by the door-to-door parcel delivery information exchange system, a deliverer side terminal and a receiver side terminal, which is the processing to mutually exchange the delivery state information and so forth.
Fig.6 is a flowchart showing the processing executed by the door-to-door parcel delivery information exchange system and the receiver side terminal, which is a part of the processing to exchange the delivery state information and so forth.
Fig. 7 is a view explaining an example of a list type display screen, including the delivery state information and so forth.
Fig. 8 is a view explaining an example of a display screen combined with image, including the delivery state information and so forth.

### Best mode for carrying out the invention

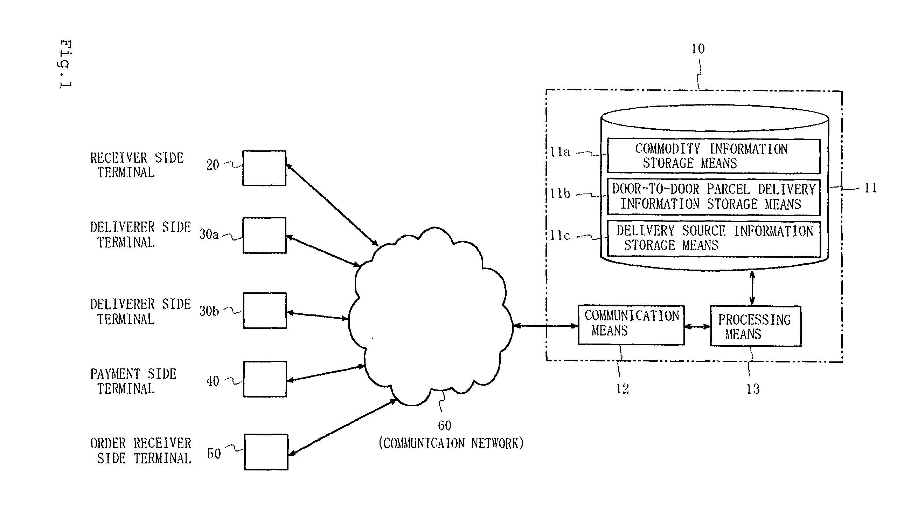

Embodiments of a door-to-door parcel delivery information exchange system of the present invention will be explained based on Fig.1 to Fig.8 hereunder.

Fig.1 is an overall system block diagram of a door-to-door parcel delivery information exchange system.

As shown in Fig.1, a door-to-door parcel delivery information exchange system 10 is connected with a receiver side terminal 20, each of the deliverer side terminals 30a and 30b, a payment side terminal 40, and a order receiver side terminal 50, through a communication network 60. Here, the communication network 60 corresponds to a network using an internet and a broad band or the like. However the communication network is not limited thereto, and it is possible to combine a LAN and leased line according to a user's use environment.

In the door-to-door parcel delivery information exchange system 10, information on a transaction state from a commodity purchase to the settlement and reception of the commodity is made into electronic data, and the electronic data is mutually exchanged on the communication network 60. The transaction mentioned here, is assumed to be transaction forms of B to B (Business to Business), B to C (Business to Consumer), C to C (Consumer to Consumer), and C to B (Consumer to Business). Namely, the aforementioned "receiver" and "order receiver" include an individual and a company.

Here, the door-to-door parcel delivery information exchange system 10 corresponds to an HTTP server or the like, for example, and as shown in Fig. 1, the door-to-door parcel delivery information exchange system 10 comprises storage means 11 of information, communication means 12 for communicating with an external device, and processing means 13 that controls an operation of each means.

The storage means 11 of information functions to hold data and a program, corresponding to a main storage device such as a RAM, a ROM, and an HDD or the like, and an auxiliary storage device, for example. In Fig. 1, the storage means 11 of information is set to be one, however the storage means of information is not limited thereto, and may be constituted of a plurality of storage media physically.

The storage means 11 of information comprises commodity information storage means 11a, door-to-door parcel delivery information storage means 11b, and delivery source information storage means 11c in a specified area. The structure of each of them will be specifically explained as follows.

The commodity information storage means 11a stores commodity information. Here, the "commodity information" refers to the information on the commodity which is an object of the commodity transaction, and for example, a fragile article such as dish, a pet, and food and so forth are assumed. The "commodity information" includes a commodity code (commodity identification information), name of the commodity, unit price of the commodity, explanation for the commodity, and weight of the commodity.

The door-to-door parcel delivery information storage means 11b includes a door-to-door parcel delivery information management database (referred to as "door-to-door parcel delivery information management DB" in this embodiment hereafter) in a specified area.

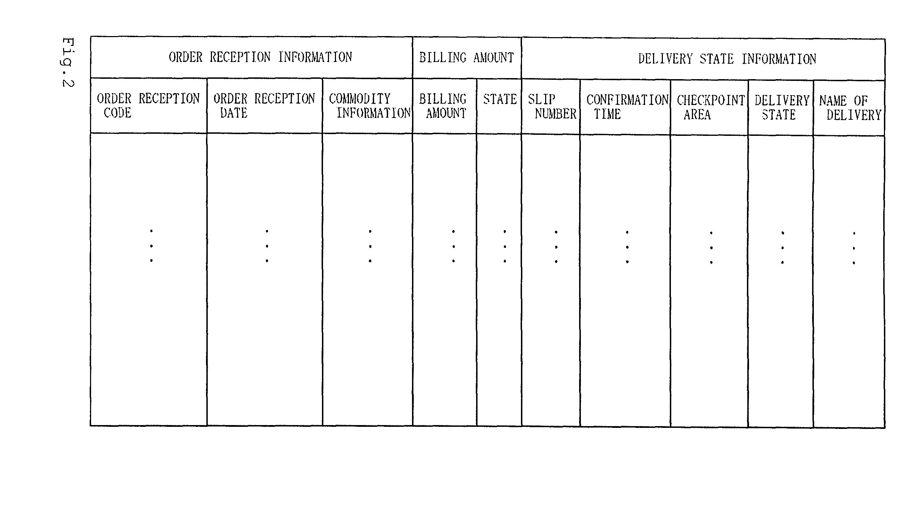

The door-to-door parcel information management DB, as shown in Fig.2, stores a billing amount based on the order reception information and delivery state information of the commodity associated with the order reception information, by every piece of order reception information of the commodity associated with the commodity information. The order reception information, the billing amount, and the delivery state information will be explained in detail hereunder.

As shown in Fig.2, the "order reception information" includes the commodity information regarding an order reception code, order reception date, and the order-received commodity, and the receiver information on a parcel owner as an orderer and the receiver (for example, contact address such as name of parcel owner and receiver (receiver ID), address, and mail address and so forth). Note that the commodity information included in the order reception information is the same as the commodity information stored in the commodity information storage means 11a.

As shown in Fig.2, the "billing amount" includes a claimed amount which is claimed as the amount requested to the receiver, and payment state thereof (whether already paid or not). By browsing the billing amount, for example, in a case of payment on delivery, the receiver stands ready to the pay for the claimed amount at home or the like. In addition, in a case of paying through a bank transfer, the above-described billing amount shall be remitted by the receiver to the bank account from ATM (Automatic Teller Machine) or the like. Note that the billing amount is calculated by referring to a charge-calculating condition as will be described later at the processing means 13.

As shown in Fig.2, the "delivery state information" includes a slip number, a confirmation time confirming the delivery state at a checkpoint, a checkpoint area, and the delivery state at the checkpoint and so forth.

For example, as the "checkpoint", a sending shop' for collecting parcels and a destination shop for bringing the parcels delivered from the sending shop to the receiver, are assumed. However, the checkpoint is not limited thereto, and for example, when a home-delivery vehicle is in moving, it is also possible to always define the time in moving as the checkpoint.

The "delivery state" is assumed to be a working state of already collected, delivery in preparation, being delivered, delivery completion, and also a moving state of being in the vicinity of an intersection, and in the vicinity of a building. Further, the "delivery state" may include the state of the commodity.

For example, when the commodity to be delivered is a fragile article, the "delivery state" may include a broken state of the fragile article in delivering the commodity, as the state of the commodity. Also, when the commodity to be delivered is a pet, the "delivery state" may include the state of the pet (physical condition, appearance, and temper) in delivering the commodity, as the state of the commodity.

Returning to Fig. 1, the door-to-door parcel delivery information storage means 11b has a charge calculation standard in a specified area.

The charge calculation standard is a calculation rule as a standard for calculating the billing amount which is claimed as the amount requested to the receiver, corresponding to a program function and a module, for example. For example, the calculation rule is expressed by unit price of a commodityx the number of commodities +delivery charge + miscellaneous expenses (consumption tax, etc). However, the charge calculation rule is not limited thereto, and can be changed as needed.

In the aforementioned calculation rule, the calculation rule of the delivery charge is expressed by delivery basic charge x weight coefficient x size coefficient. The delivery basic charge is calculated according to a basic charge calculation table in which an address of the receiver is associated with the basic charge. The weight coefficient is calculated according to a weight coefficient table in which a total weight (weight of the number of commodities) of parcels is associated with the weight coefficient. The size coefficient is calculated according to a size coefficient table in which the size of the parcel is associated with the size coefficient.

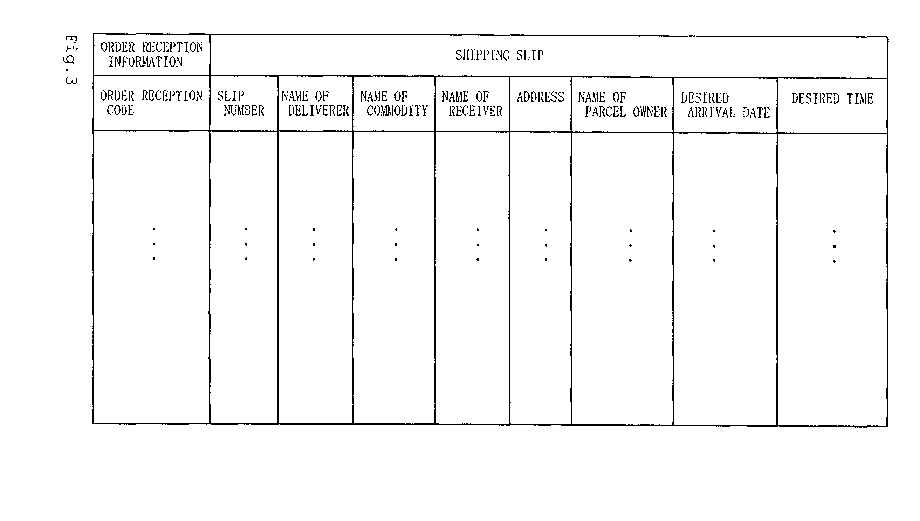

In addition, as shown in Fig.3, the door-to-door parcel delivery information storage means 11b functions to store the shipping slip of the commodity based on the order reception information, by every piece of order reception information (order reception code).

The "shipping slip" is a slip used by a deliverer in service. As shown in Fig. 3, the "shipping slip" includes details about, for example, a slip number, name of the deliverer, name, each address, each contact address, each postal code of the receiver of a delivery destination and a parcel owner, content of the parcel (name of the commodity of the commodity information included in the order reception information), desired arrival date, and desired arrival time and so forth.

The delivery source information storage means 11c has a delivery source information management database (referred to as a "delivery source information management DB" in this embodiment hereafter) in the specified area. The delivery source information management DB functions to store the delivery source information of the delivery source that sends the commodity associated with the order reception information.

The "delivery source information" includes the commodity code of the commodity information and the deliverer information on the deliverer, in which the aforementioned commodity code is associated with the deliverer information. The "deliverer information" includes, for example, the deliverer information such as identification information of the delivery source such as a deliverer ID, name of the deliverer, and the mail address.

The communication means 12 functions to electrically connect to the communication network 60, regardless of wired or wireless line, corresponding to a communication board or the like, for example.

The processing means 13 functions to control an overall operation of the door-to-door parcel delivery information exchange system 10, corresponding to a CPU or the like, for example. Note that in Fig. 1, the processing means 13 is constituted of a single processing means, however it may be constituted by combining a plurality of processing means.

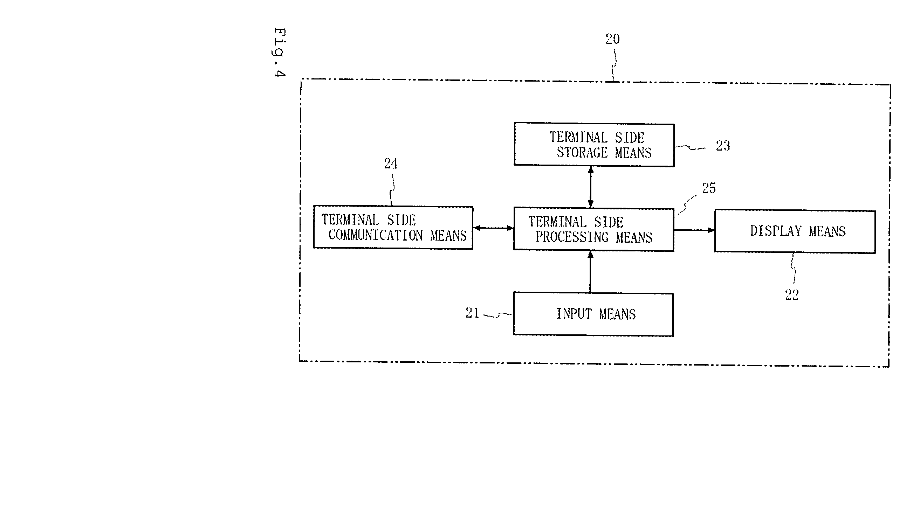

The receiver side terminal 20 shown in Fig.1 is a terminal used by the receiver who receives the order-received commodity, corresponding to a personal computer equipped with a browser function, a cellular phone, a PDA, a home video game machine, and a two-way television set or the like, for example. Here, as shown in Fig.4, the receiver side terminal 20 comprises input means 21, display means 22, terminal side storage means 23, terminal side communication means 24 and terminal side processing means 25. The structure of each means will be explained as follows.

The input means 21 functions to receive information, corresponding to a keyboard, a mouse, a jog dial or the like, for example. The display means 22 functions to display the information, corresponding to a display device or the like, for example. The terminal side storage means 23 functions to hold data and a program, corresponding to a RAM, a ROM, and an HDD or the like, for example. The terminal side communication means 24 functions to electrically connect to the communication network 60, regardless of wired or wireless line, corresponding to a communication board or the like, for example. The terminal side processing means 25 functions to control the overall operation of the receiver side terminal 20, corresponding to the CPU or the like, for example.

Note that Fig.1 shows only one receiver side terminal, however, a plurality of receiver side terminals may be arranged according to the user's use environment.

The deliverer side terminals 30a and 30b shown in Fig. 1 are respectively terminals used by a deliverer delivering a parcel, corresponding to the personal computer equipped with a browser function, the cellular phone, and the PDA or the like, for example. Further specifically, the deliverer side terminal 30a is a terminal used by the deliverer of the sending shop for collecting parcels, and the deliverer side terminal 30b is a terminal used by the deliverer of the destination shop for bringing the parcel delivered from the sending shop to the receiver.

Here, in the same way as a case in the receiver side terminal 20, the deliverer side terminals 30a and 30b comprise the input means 21, the display means 22, the terminal side storage means 23, the terminal side communication means 24, and the terminal side processing means 25 (see Fig.4).

The payment side terminal 40 is a terminal for completing the payment according to the billing amount. The payment side terminal 40 corresponds to an ATM (Automatic Teller Machine) or the like, for example, and set in a financial institution and so forth.

The order receiver side terminal 50 is a terminal used by a manufacture or the like who receives the order of the commodity, corresponding to the personal computer equipped with a browser function, the cellular phone, and the PDA or the like, for example. Note that the structure of the order receiver side terminal 50 is the same as that of the receiver side terminal 20 in Fig.4.

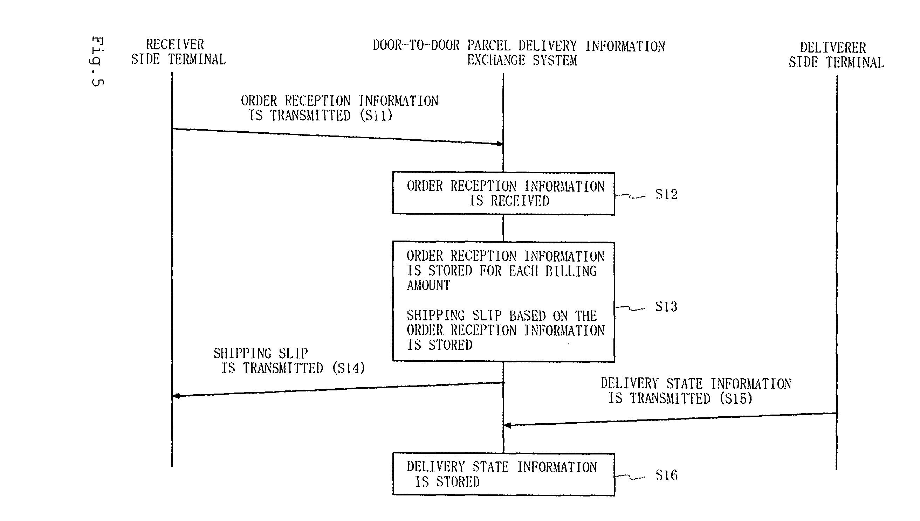

Next, operation of the embodiments will be explained on the basis of Fig.5 to Fig.8.

### (Management processing of order reception information and delivery state information)

Fig.5 is a flowchart showing the processing of managing the order reception information, which is the processing executed by the door-to-door parcel delivery information exchange system, the receiver side terminal and the deliverer side terminal.

In this processing, after completing the connection between the door-to-door parcel delivery information exchange system 10 and the receiver side terminal 20, a commodity menu for selecting the commodity information is previously received from the door-to-door parcel delivery information exchange system 10 at the receiver side terminal 20, and the processing is executed according to a procedure shown hereunder.

First, the receiver side terminal 20, with the commodity menu displayed on the display means 22, transmits the order reception information (order placement information) of the commodity associated with the specific commodity information selected from the commodity menu, to the door-to-door parcel delivery information exchange system 10 (S11).

For example, the specific commodity information thus selected is the information on the commodity of a pet and a fragile article, and also the order reception information thus transmitted is the information on the pet and the fragile article. Note that as a method of "selecting the specific commodity information from the commoditymenu", for example, instruction to the specific commodity information by mouse is adopted.

The processing means 13 of the door-to-door parcel delivery information exchange system 10 receives the order reception information of the commodity associated with the specific commodity information through the communication means 12 (S12).

Here, when the order reception information of S12 is received, the processing means 13 receives the authentication information (such as pass cord and so forth), from the receiver side terminal 20, and allows the receiver side terminal 20 to receive the transmission request on condition that the authentication information thus received coincides with the authentication information stored in the specified area of the storage means 11 of information. Thus, the order reception information or the like can be prevented from a third person who tries to illegally browse the information.

Subsequently, the processing means 13 stores the billing amount based on the order reception information thus received in the door-to-door parcel delivery information management DB, by every piece of the order reception information thus received. In addition, the processing means 13 prepares a shipping slip d1 of the commodity based on the order reception information thus received, and stores the shipping slip d1 thus prepared in the door-to-door parcel delivery information management DB by every piece of the received order reception information (S13).

Here, in storing the billing amount of S13 in the door-to-door parcel delivery information management DB, the processing means 13 refers to the charge calculation standard stored in the door-to-door parcel delivery information storage means 11b, and calculates the billing amount based on the order reception information thus received, and thereafter, stores the billing amount thus calculated in the door-to-door parcel information management DB.

The processing means 13 reads the delivery source information of the delivery source who sends the commodity associated with the order reception information thus received, from the delivery source information management DB. Moreover, the processing means 13 refers to the door-to-door parcel information management DB, and transmits the shipping slip d1 thus prepared to the deliverer side terminal 30a of the delivery source information thus read by every piece of the order reception thus received, through the communication means 12 (S14).

Here, a reason for "the delivery source information of the delivery source who sends the commodity associated with the order reception, is read" is that the delivery source information associated with the commodity code of the commodity information included in the order reception information is read.

Note that as a method of "transmitting the shipping slip to the deliverer side terminal 30a", transmission by mail is adopted, for example, and in this case, the processing means 13 transmits the shipping slip to the mail address included in the delivery source information read from the door-to-door parcel delivery information management DB.

Thereafter, when the processing means 13 receives the delivery state information of the commodity associated with the order reception information (such as a broken state of a fragile article, and a state of a pet) from the deliverer side terminal 30a by every piece of the reception information through the communication means 12 (S15), the delivery state information thus received is stored in the door-to-door parcel delivery information management DB by every piece of the order reception information (S16).

Here, the processing executed in S15 to S16 is further specifically explained as follows. When the processing means 13 receives the delivery state information of the commodity associated with the order reception information from the deliverer side terminal 30a of the sending shop and the deliverer side terminal 30b of the destination shop by every piece of the order reception information through the communication means 12, each delivery state information thus received is stored in the door-to-door parcel delivery information management DB by every piece of the same order reception information.

By the processing as described above, the processing to manage the order reception information and the delivery state information is completed. This contributes to managing the transaction related to the flow of the commodity from shipping order of the commodity until the commodity is delivered at the hand of a receiver, as the order reception information and the delivery state information on a case-by-case base.

Here, in the processing of the S13, the processing means 13 of the parcel information exchange system 10 reads a notification (including the mail address of the receiver) of requesting the billing amount based on the order reception information thus received, from the storage means 11, and transmits the notification to the payment side terminal 40 through the communication means 12.

Then, thereafter, the payment side terminal 40, which receives the above notification, may transmit the notification to the receiver side terminal 20 (such as mail). Thus, it is estimated that the payment of the charge is smoothly made.

### (Exchange processing of delivery state information, etc.)

Next, explanation will be given to the processing of exchanging the delivery state information and so forth, which is the processing executed by the door-to-door parcel delivery information exchange system 10 and the receiver side terminal 20, after the processing of S16 shown in Fig.5.

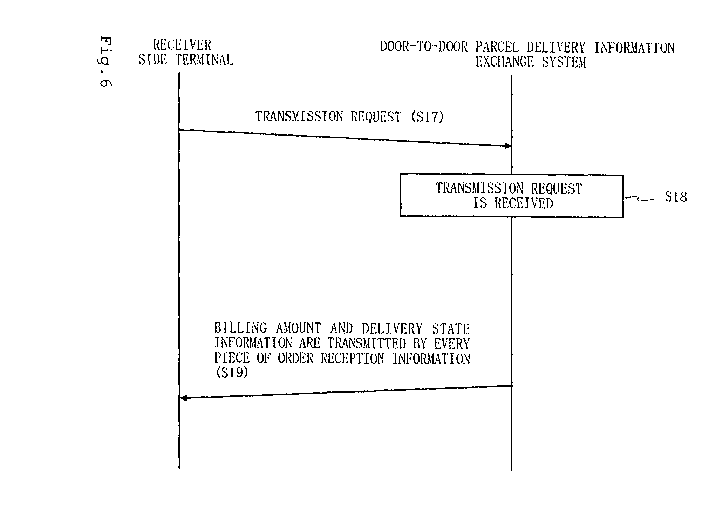

Fig. 6 is a flowchart showing a part of the processing of exchanging the delivery state information and so forth, which is the processing executed by the door-to-door parcel delivery information exchange system 10 and the receiver side terminal 20.

In this processing, the receiver side terminal 20 previously receives retrieval request screen information from the door-to-door parcel information exchange system 10, for giving a transmission request of the storage result stored in the door-to-door parcel delivery information management DB, and executes the processing according to the procedure shown hereunder.

First, after the processing of S16, the receiver side terminal 20, which receives the retrieval request screen information, gives a transmission request of the storage result stored in the door-to-door parcel delivery information management DB, to the door-to-door parcel delivery information exchange system 10 (S17).

For example, in the transmission request, a receiver ID of the receiver using the receiver side terminal 20 is used as a retrieval key. However, the transmission request is not limited thereto, and the order reception information or the whole part or a part of the delivery state information (for example, only the name of the deliverer) can be used as the retrieval key.

By the aforementioned request, the processing means 13 of the door-to-door parcel delivery information exchange system 10 receives the aforementioned transmission request from the receiver side terminal 20 (S18).

Subsequently, the processing means 13 refers to the storage result stored in the door-to-door parcel delivery information management DB, and transmits the billing amount based on the order reception information and the delivery state information of the commodity associated with the order reception information, to the receiver side terminal 20 through the communication means 12 by every piece of order reception information (S19).

Note that the reason for "being transmitted to the receiver side terminal 20" is that the processing means 13 reads the IP address specific to the receiver side terminal 20 from the specified area of the storage means 11, and transmits the above-described billing amount and the delivery state information of the commodity to the IP address thus read.

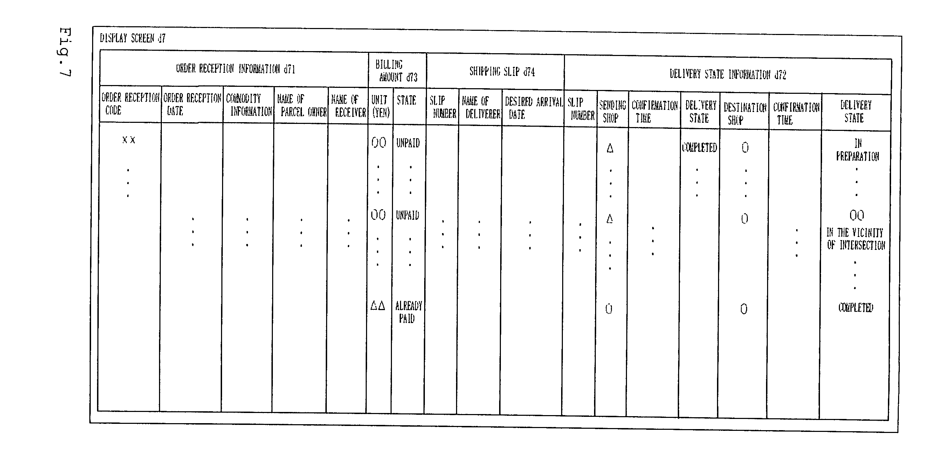

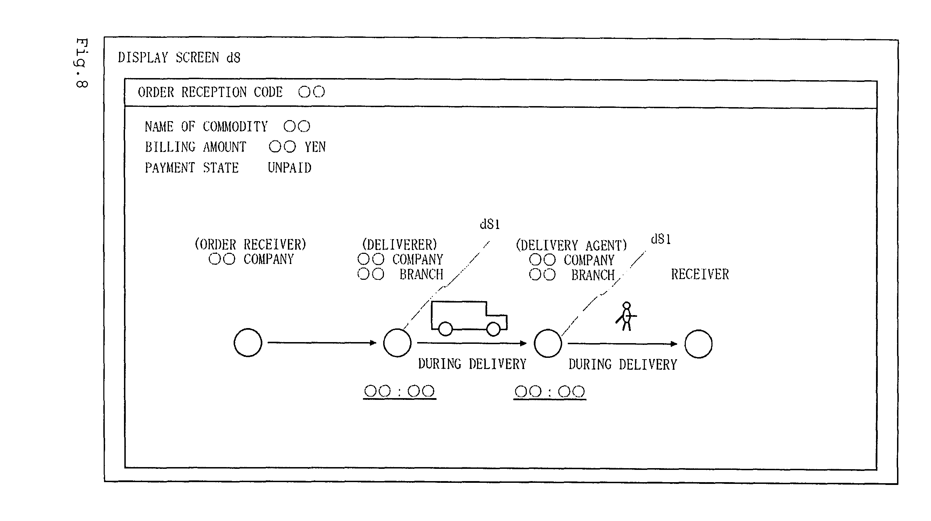

By receiving the transmission of S19, the receiver side terminal 20 forms a display screen including the delivery state information, in the display means 22. Here, an example of the display screen formed in the display means 22 is shown in Fig.7 and Fig.8.

As shown in Fig.7, an order reception information d71, a delivery state information d72, and a billing amount d73 are displayed in a list on a list type display screen d7. Specifically, as the order reception information d71, an order reception code, an order reception date, the commodity information (name of the commodity, unit price of the commodity, and explanation for the commodity, and so forth) are displayed. As the delivery state information d72, delivery in preparation, in the vicinity of an intersection, delivery completion, the broken state of a fragile article, and the state of a pet (physical condition, appearance, and temper or the like) are displayed. As the billing amount d73, a payment state is displayed, such as the billing amount and whether or not already paid.

Fig. 8 is a block diagram of a display screen combined with image, which is formed in the display means. As shown in Fig. 8, the display screen d8 combined with image is formed in combination with image, thereby having an easily viewable structure compared with a list type display screen d7. In the display screen d8 combined with image, lamps d81 classified by every order receiver, the deliverer (o o company o o branch) is used to display who handles the commodity out of the order receiver, the deliverer (o o company o o branch), and the receiver. For example, when blue display is shown by the lamp d81 of the deliverer, it means that the deliverer handles the commodity. The other structure is almost the same as the structure of the list type display screen d7.

Here, the reason for "payment state is displayed" is explained as follows. Namely, from the payment side terminal 40, the processing means 13 receives the information that the payment in accordance with the billing amount is completed, by every piece of the order reception information through the communication means 12, and thereafter refers to the result stored in the door-to-door parcel delivery information management DB, and stores the billing amount regarding it as already paid by every piece of the order reception information.

In addition, in the display screen d7 as shown in Fig. 7, the shipping slip d74 including the slip number, the name of the deliverer, the desired arrival date, and the desired arrival time, and so forth is also displayed.

Through the above-described processing, the processing of exchanging the delivery state information and the billing amount or the like, is completed.

Here, in the processing performed in the aforementioned S11 to S19, the door-to-door parcel delivery information exchange system 10 performs encoding processing, and the receiver side terminal 20 performs decoding processing. Such processing will be explained hereunder.

The processing means 13 of the door-to-door parcel delivery information exchange system 10 has a function to encode (such as coding) the order reception information, the shipping slip, the billing amount and the delivery state information, based on an encoding algorithm of an encoding program stored in the storage means 11 of information. Thus, the order reception information or the like can be prevented from a third person who tries to illegally browse it, to thereby protect a privacy of the receiver. In addition, the order reception information can be prevented from a third person who tries to illegally add, delete, and change it.

Meanwhile, the processing means 25 of the receiver side terminal 20 has a function to decode the order reception information, the shipping slip, the billing amount, and the delivery state information, based on the decoding algorithm of the decoding program stored in the specified area of the terminal side storage means 23.

### (Retrieval processing from the deliverer side terminal)

Here, in the processing of the aforementioned S17, the deliverer side terminal 30a or the deliverer side terminal 30b may give the aforementioned transmission request to the door-to-door parcel delivery information exchange system 10 as a substitute for the receiver side terminal 20. The transmission request in this case, for example, uses the shipping slip and the whole part or a part of the delivery state information as a retrieval key. Then, the processing means 13 of the door-to-door parcel delivery information exchange system 10 that receives the transmission request performs the following processing.

In the processing performed in the aforementioned S18 to S19, the processing means 13 refers to the door-to-door parcel delivery information management DB, and transmits the shipping slip, the order reception information, or the billing amount based on the order reception information associated with the whole part or a part of the order reception information, to which the transmission request is given, and the delivery state information of the commodity associated with the order reception information, to the deliverer side terminal 30a (or the deliverer side terminal 30b) by every piece of the order reception information through the communication means 12.

Thus, the delivery state information (such as delivery in preparation or the like) according to the request from the deliverer side terminal is provided for the deliverer side terminal. This contributes to confirming an area with bad delivery efficiency such as the area where delivery preparation work is slow. Accordingly, in improving the delivery efficiency of the area where the delivery efficiency is bad, the aforementioned delivery state information is useful in determining whether or not the delivery efficiency is bad.

### (Retrieval processing from the receiver side terminal)

In addition, in the processing of the aforementioned S17, the order receiver side terminal 50 may give the transmission request to the door-to-door parcel delivery information exchange system 10, in a substitute for the receiver side terminal 20. Note that in the same way as the transmission request in a case of the deliverer side terminal, the transmission request is the request using the shipping slip, the order reception information or the whole part or a part of the delivery state information as a retrieval key. In this case, by receiving such a request, the processing means 13 refers to the door-to-door parcel delivery information management DB in the processing performed in the aforementioned S18 to S19, and transmits the shipping slip, the order reception information or the billing amount based on the order reception information associated with the whole part or a part of the order reception information, to which the transmission request is given, and the delivery state information of the commodity associated with the order reception information, to the order receiver side terminal 50 by every piece of the order reception information through the communication means 12.

Thus, if an order-received commodity is shipped by an order receiver after confirming that the order-received commodity is already paid on the receiver side terminal 50, unpaid amount can be prevented. Therefore, the order receiver can ship the commodity safely before confirming payment. This contributes to shortening the delivery time.

### (Retrieval processing from the payment side terminal)

Further, in the processing of the aforementioned S17, the payment side terminal 40 may give the aforementioned transmission request to the door-to-door parcel delivery information exchange system 10, in a substitute for the receiver side terminal 20. Note that the transmission request is the same as the transmission request in the case of the aforementioned deliverer side terminal.

In this transmission request, by receiving the request, the processing means 13 refers to the door-to-door parcel delivery information management DB in the processing performed in the aforementioned S18 to S19, and transmits the shipping slip, the order reception information or the billing amount based on the order reception information associated with the whole part or a part of the order reception information, to which the transmission request is given, and the delivery state information of the commodity associated with the order reception information, to the order receiver side terminal 50 by every piece of the order reception information through the communication means 12.

As described above, according to this embodiment, the order reception information and the delivery state information are received from the receiver side terminal and the deliverer side terminal, and the billing amount and the delivery state information are stored by every piece of the order reception information. Then, the order reception information, the billing amount, and the delivery state information according to the transmission request from the receiver side terminal, the deliverer side terminal, and the order receiver side terminal or the payment side terminal, are transmitted to each of the above terminals. Thus, other than the flow of the commodity from order reception of the commodity until the commodity is brought at the hand of the receiver, the flow of the payment can be also confirmed. This contributes to smoothly carrying out the commodity transaction from a commodity purchase to the settlement and reception of the commodity. For example, simultaneously with receiving an order of the commodity from the receiver, order reception processing can be completed. Then, thereafter the receiver may pay for the charge of the commodity, and the order receiver may ship the commodity.

A merit from the viewpoint of the receiver, the deliverer, the order receiver, and the financial institution will be described in detail.

By using the aforementioned system, the receiver using the receiver side terminal can confirm when the parcel is brought (delivery state information), also can confirm the billing amount of the commodity, and therefore may stand by and set aside a proper amount to pay for the commodity at a time of the arrival of the parcel. Moreover, by confirming whether the payment is already made or not, the receiver is prevented from suffering a loss due to duplicate payments at payment on delivery. Also, by confirming the name of the parcel owner and the order reception date, the receiver can refuse to take the delivery of the parcel brought from an unfamiliar parcel owner. Further, when the content of the parcel is a fragile article or a pet, by confirming the state of them on the receiver side terminal, the receiver can receive the fragile article and the pet or the like under a good state.

Since a home stay rate of the receiver is increased by utilizing this system by the receiver, the deliverer using the deliverer side terminal can have an improved delivery efficiency. In addition, even if the delivery is delayed, by confirming the delivery state information such as a delivery time and a checkpoint, the deliverer can objectively confirm the delivery time and the checkpoint where the delay is caused. Further, by utilizing this system, increase in delivery amount, improvement in money collection at payment on delivery, prior grasping of a flow rate of delivery parcels, and a connecting point with other company (such as a connecting point with different deliverer and a connecting point between an order receiving manufacture and the deliverer) are clarified to the deliverer.

The order receiver such as a commodity manufacture using the order receiver side terminal has a merit such that nonpayment is prevented, sales is increased, and the commodity can be shipped simultaneously with receiving the order of the commodity (conventionally, the commodity is, in many cases, shipped after confirming that the payment is already made). Moreover, by properly confirming the order reception information, the delivery state information, and the billing amount and so forth on the order receiver side terminal, the order receiver can estimate the timing of demand. Particularly, when the order of the commodity having a short life cycle and the commodity having fashionable property are received, there is a significant merit in estimating a demand time of such commodities.

By properly confirming the order reception information and the delivery state information of the commodity, and the billing amount or the like, the financial institution using the payment side terminal 40 can confirm the flow of the commodity (such as the transaction among the order receiver, the deliverer, and the receiver), in addition to the conventionally confirmed flow of the payment (for example, such that the payment of the commodity is made from the receiver to the bank account as requested by a specific order receiver.)

Moreover, the payment side terminal 40 may have the following function. However, a prerequisite in this case is that the aforementioned order reception information and the shipping slip include a sorting criterion of the payment when the payment of the commodity is made to the bank account (such as a ratio by which the payment is made to the bank account as requested by the order receiver and the deliverer, respectively). When the payment side terminal 40 receives the transmission of the aforementioned order reception information and the shipping slip, the payment sorting criterion included in the order reception information and the shipping slip is displayed on the display means 22, and thereafter according to the sorting criterion thus displayed, the function to make a payment to the bank account is executed. Thus, transfer processing can be smoothly executed. Of course, in this case, instead of transferring each time, money of several times can also be transferred to a bank. In addition, through the process described above, increase in profit by transferring fee, storage of credit of a transferring destination (such as a card subsidiary), and reduction in reclaim owing to a bank transfer, can be expected.

The present invention is not limited to the above-described embodiments, and alternative means usually used by those in the art can be adopted. For example, as a correspondence procedure to persons involved in the commodity transaction such as the order receiver, the deliverer, and the receiver, each terminal of them may be notified accordingly by mail.

### (Modified example)

A modified example of the embodiment is utilized in delivery and receipt of the commodity and payment.

Explanation will be given to each case of transferring money from a net settlement account of a third party (such as EDI account), and transferring the money from the account of the receiver himself, respectively hereunder.

### - Case 1 (when the money is transferred from the net settlement account of a third party) -

In the case 1, the door-to-door parcel delivery information storage means 11 of the door-to-door parcel delivery information exchange system 10 has a receiver side account management database for storing the name of the receiver, the account of the receiver, and an amount of money, associated to one another. Also, the door-to-door parcel delivery information storage means 11 has a order receiver side account management database for storing the name of the order receiver, the order receiver number, and the account of the order receiver associated one another.

Then, the processing means 13 of the door-to-door parcel delivery information exchange system 10 has the following function. Namely, the processing means 13 receives the transmission of a receipt confirmation notification such that the commodity is already received, from the receiver side terminal 20 through the communicationmeans 12. For example, the receipt confirmation notification includes the name of the order receiver, the billing amount of the commodity, and the name of the receiver.

Thereafter, the processing means 13 refers to the receiver side account management database, and specifies the account of the receiver in accordance with the receipt confirmation notification. For example, the account of the receiver is specified by using the name of the receiver.

Also, the processing means 13 refers to the order receiver account management database, and specifies the account of the order receiver in accordance with the receipt confirmation notification. For example, the account of the order receiver is specified by using the name of the order receiver.

Then, the processing means 13 performs the processing of carrying out the transferring processing to the account of the order receiver thus specified from the account of the receiver thus specified, thereby performing a settlement processing. Of course, in this case, instead of transferring each time, money of several times may be totaled at the end of the month and may be transferred to a bank.

### - Case 2 (when the money is transferred from the account of the receiver himself) -

In the case 2, the communication network 60 shown in Fig. 1 is further connected to a financial institution side computer system. The financial institution side computer system is set in the financial institution, for performing the settlement processing.

The financial institution side computer system has a receiver side account management database storing the name of the receiver, the account of the receiver, and the amount of money, associated to one another, and has an order receiver side account management database storing the name of the order receiver and the account of the order receiver associated to each other.

Then, the financial institution side computer system, which receives the transmission of the receipt confirmation notification such that the commodity is already received, refers to the receiver side account management database and the order receiver side account management database, and performs the transfer processing from the account of the receiver to the account of the order receiver. For example, the receipt confirmation notification thus received includes the name of the order receiver, the billing amount of the commodity, and the name of the receiver. Of course, in this case, instead of transferring each time, money of several times may be totaled at the end of the month and may be transferred to a bank.

By the modified examples thus explained, the delivery and receipt of the commodity and the payment is safely performed, thereby assuring a safeness of the transaction.

### Industrial Applicability

With structure and function thus explained, the present invention provides an unconventional door-to-door parcel delivery information exchange system capable of grasping a transaction state from a commodity purchase to the settlement and reception of the commodity, by mutually exchanging the transaction state such as a delivery state after purchasing the commodity on a computer network.

## Claims

1. A door-to-door parcel delivery information exchange system, comprising:
commodity information storage means that stores commodity information;
door-to-door parcel delivery information storage means that stores a billing amount based on the order reception information and a delivery state information of the commodity associated with the order reception information, by every piece of order reception information of the commodity associated with the commodity information;
communication means that communicates with an external device; and
processing means that controls an operation of each means,
wherein the processing means executes a processing such as receiving the order reception information of the commodity associated with the commodity information from a receiver side terminal of the commodity that receives the commodity information through the communication means, and then storing a billing amount based on the order reception information in the door-to-door parcel delivery information storage means by every piece of order reception information thus received; receiving delivery state information of the commodity associated with the order reception information from a deliverer side terminal by every piece of the order reception information through the communication means, and then storing the delivery state information thus received in the door-to-door parcel delivery information storage means by every piece of order reception information; and when receiving a transmission request of a storage result stored in the door-to-door parcel delivery information storage means from the receiver side terminal or the order receiver side terminal of the commodity, referencing a storage result stored in the door-to-door parcel delivery information storage means, and then transmitting the billing amount based on the order reception information and the delivery state information of the commodity associated with the order reception information to the receiver side terminal or the order receiver side terminal, from which the transmission request is given, by every piece of the order reception information through the communication means.

2. The door-to-door parcel delivery information exchange system according to claim 1, further comprising delivery source information storage means that stores delivery source information of a delivery source from which a commodity associated with the order reception information is shipped, wherein the door-to-door parcel delivery information storage means performs the processing such as storing a shipping slip of the commodity based on the order reception information by every piece of the order reception information, and the processing means performs the processing such as preparing the shipping slip of the commodity based on the order reception information thus received, and storing the shipping slip thus prepared in the door-to-door parcel delivery information storage means by every piece of order reception information thus received; reading the delivery source information of the delivery source, from which the commodity associated with the order reception information thus received is shipped from the delivery source information storage means; referencing the door-to-door parcel delivery information storage means, and then transmitting the shipping slip thus prepared to the deliverer side terminal of the delivery source of the delivery source information thus read, by every piece of order reception information that receives the shipping slip thus prepared.

3. The door-to-door parcel delivery information exchange system according to claim 1, wherein the processingmeans executes the processing such as referencing a result stored in the door-to-door parcel delivery information storage means when receiving the information such that payment according to the billing amount is completed, from the payment side terminal by every piece of the order reception information through the communication means, and storing the billing amount as already paid by every piece of the order reception information.

4. The door-to-door parcel delivery information exchange system according to claim 1, wherein the commodity information includes the information on a fragile article or a pet, and the delivery state information includes the information on a broken state of the fragile article, or a state of the pet, in delivering the commodity.
